# EUROPEAN PATENT APPLICATION

(11) **EP 4 317 012 A1**
(43) Date of publication of application: **07.02.2024**
(21) Application number: 22775534.5
(22) Date of filing: 22.03.2022
(51) Int. Cl.: B65D 65/46, C08J 5/18

(54) **WATER-SOLUBLE FILM, MEDICINE PACKAGE USING SAME, METHOD FOR PRODUCING SAID WATER-SOLUBLE FILM, AND METHOD FOR PRODUCING SAID MEDICINE PACKAGE**

(30) Priority: 25.03.2021 JP 2021052052
(71) Applicant: Mitsubishi Chemical Corporation, Chiyoda-ku Tokyo 100-8251 (JP)
(72) Inventor: KUDO Yuuma, Tokyo 100-8251 (JP)
(74) Representative: Vossius & Partner Patentanwälte Rechtsanwälte mbB
(86) International application number: PCT/JP2022/012982
(87) International publication number: WO 2022/202750

(57) **Abstract**

A casein-containing water-soluble film is provided, which is useful for packaging applications and is excellent in water solubility, film strength, stretchability, formability, and sealability. A chemical agent package is also provided, which is produced by packaging a chemical agent with the water-soluble film. The water-soluble film contains casein and/or a casein salt, a polyvinyl alcohol resin (A), and a plasticizer (B), wherein the polyvinyl alcohol resin (A) includes a cationic polyvinyl alcohol resin and/or a nonionic polyvinyl alcohol resin, wherein the content ratio (mass ratio) of the casein and/or the casein salt to the polyvinyl alcohol resin (A) is 15/85 to 45/55, wherein the plasticizer (B) is present in a proportion of 15 to 60 parts by mass based on 100 parts by mass of the polyvinyl alcohol resin (A).

## Description

### TECHNICAL FIELD

The present disclosure relates to a water-soluble film containing casein or a casein salt. Specifically, the present disclosure relates to a water-soluble film containing casein or a casein salt and a polyvinyl alcohol resin, and to a chemical agent package using the water-soluble film.

### BACKGROUND ART

From the viewpoint of global environment protection in recent years, it is desirable to develop a more biodegradable film using a natural material, instead of a plastic film formed from a conventional petroleum-derived material.

Known examples of the film using the natural material include protein films using gelatin, soy protein, casein, and the like. Among others, the casein (which is a protein contained in milk) is available in a constant quality at a lower cost, and is excellent in biodegradability. Therefore, the casein is attractive as an alternative to the petroleum-derived material and as an edible (water-soluble) food packaging film material.

For example, a packaging film excellent in gas barrier property, oil resistance, dead fold property, and the like according to the type and the use application of food to be packaged is proposed as the casein-containing film (PTL 1).

### RELATED ART DOCUMENT

### PATENT DOCUMENT

PTL 1: JP-A-2017-191010

### SUMMARY

However, it is conventionally known that casein films are brittle. The casein film described above is also insufficient in strength and stretchability. In order to provide a film excellent in toughness and formability, therefore, further improvement is needed in the formability of the film when food, chemical agent or the like is packaged with the film.

Particularly, where liquid is packaged with the film, liquid is liable to leak from a seal portion having a lower strength. Therefore, further improvement is needed in the sealability of the film.

In view of the foregoing, the present disclosure provides a casein-containing water-soluble film excellent in water solubility, film strength, stretchability, formability, and sealability, and a chemical agent package produced by packaging any of various chemical agents with the water-soluble film.

In view of the foregoing, the inventor of the present invention conducted intensive studies. As a result, the inventor found that a water-soluble film containing casein and/or a casein salt and a polyvinyl alcohol resin at a specific ratio and containing a specific amount of a plasticizer is excellent in film strength, stretchability, formability, and sealability.

It is noted that the polyvinyl alcohol resin is a biodegradable resin, which makes it possible to solve the above problems without significantly deteriorating the biodegradability of the entire film.

The present disclosure has the following features:
[1] A water-soluble film contains casein and/or a casein salt, a polyvinyl alcohol resin (A), and a plasticizer (B), wherein the polyvinyl alcohol resin (A) includes a cationic polyvinyl alcohol resin and/or a nonionic polyvinyl alcohol resin, wherein the content ratio (mass ratio) of the casein and/or the casein salt to the polyvinyl alcohol resin (A) is 15/85 to 45/55, wherein the plasticizer (B) is present in a proportion of 15 to 60 parts by mass based on 100 parts by mass of the polyvinyl alcohol resin (A).
[2] In the water-soluble film according to [1], the casein salt is at least one selected from the group consisting of potassium caseinate, sodium caseinate, calcium caseinate, and magnesium caseinate.
[3] The water-soluble film according to [1] or [2] has a water content of 3 to 15 mass %.
[4] The water-soluble film according to any one of [1] to [3] is used to package a chemical agent.
[5] A chemical agent package includes a package bag formed from the water-soluble film according to any one of [1] to [4], and a chemical agent packaged in the package bag.
[6] In the chemical agent package according to [5], the chemical agent is a liquid detergent.
[7] A method for producing the water-soluble film according to any one of [1] to [4], includes: casting, on a cast surface, a film formation material containing the casein and/or the casein salt, the polyvinyl alcohol resin (A), and the plasticizer (B); and drying the cast film formation material.
[8] A method for producing the chemical agent package according to [5] or [6] includes: wrapping a chemical agent with the water-soluble film according to any one of [1] to [4]; and press-sealing the water-soluble film.

The water-soluble film of the present disclosure is excellent in film strength, stretchability, formability, and sealability. Therefore, the water-soluble film can be advantageously used for chemical agent packaging applications because, when the water-soluble film is used to package a chemical agent, the resulting chemical agent package is free from breakage and content leakage.

### DESCRIPTION OF EMBODIMENTS

Specific embodiments of the present invention will hereinafter be described by way of example. However, it should be understood that the present invention be not limited to these embodiments.

In the present disclosure, a polyvinyl alcohol is often abbreviated as "PVA."

In the present disclosure, an expression "X to Y" (wherein X and Y are given numbers) means "not less than X and not greater than Y" and is intended to also mean "preferably greater than X" or "preferably less than Y" unless otherwise specified.

An expression "not less than X" (wherein X is a given number) or "not greater than Y" (wherein Y is a given number) is intended to also mean "preferably greater than X" or "preferably less than Y."

Further, an expression "X and/or Y" (wherein X and Y are given components) means "at least one of X and Y" and, therefore, has three meanings including "X alone" "Y alone" and "X and Y."

A water-soluble film according to one embodiment of the present invention (hereinafter sometimes referred to simply as "the water-soluble film") contains casein and/or a casein salt, and a PVA resin (A).

The water-soluble film preferably contains a main component including the PVA resin (A) and the casein and/or the casein salt.

The term "main component" herein means a component contained in the greatest proportion among other components. The proportion of the main component is typically not less than 50 mass %, preferably not less than 55 mass %, particularly preferably not less than 60 mass %, based on the overall mass of the water-soluble film. If the proportion of the main component is excessively small, the water solubility tends to be reduced, and the film mechanical properties tend to be deteriorated. The upper limit of the proportion of the main component is typically not greater than 99 mass %, preferably not greater than 95 mass %, particularly preferably not greater than 90 mass %.

The term "water-soluble film" herein means a film that is soluble in water at around ordinary temperature (about 20°C).

The solubility of the water-soluble film is rated in the following manner.

The film is cut to a size of 3 cm × 5 cm, and the resulting film sample is put in a 1-L beaker containing water (1 L) and fixed by a jig. Then, the water is stirred by a stirrer (having a rotor length of 3 cm and a rotation speed of 750 rpm) while being maintained at a water temperature of 20°C. When dispersion of any insoluble particulate pieces of the film sample having a diameter of 1 mm or greater is not visually observed, the film sample is considered to be dissolved.

The content ratio (mass ratio) of the casein and/or the casein salt to the PVA resin (A) is typically 1/99 to 99/1, particularly preferably 5/95 to 80/20, more preferably 10/90 to 60/40. In the water-soluble film, the content ratio (mass ratio) needs to be 15/85 to 45/55, and is preferably 20/80 to 40/60.

If the content ratio of the casein and/or the casein salt is excessively high, the film tends to be poorer in strength and other mechanical properties. Further, the compatibility of the casein and/or the casein salt with the PVA resin tends to be poorer, thereby reducing the water solubility of the film.

### <Casein and/or casein salt>

Casein is a major protein accounting for the majority of proteins contained in milk, and is a mixture mainly containing α-casein, β-casein, and κ-casein.

There are several methods for separating the casein from the milk. For example, so-called acid casein is industrially produced by addition of an acid. However, the acid casein has poor water solubility and, therefore, the casein salt is typically used, which is highly soluble in water and easy to handle.

Examples of the casein salt include potassium caseinate, sodium caseinate, calcium caseinate, and magnesium caseinate. These may be each used alone, or two or more of these may be used in combination. Of these, sodium caseinate is preferably used from the viewpoint of the water solubility and the compatibility with the PVA resin.

### <PVA resin (A)>

Usable as the PVA resin (A) for the water-soluble film are a nonionic PVA resin that does not have any charge-containing functional group, and an anionic PVA resin and a cationic PVA resin that each have a charge-containing ionic group.

### [Nonionic PVA resin]

Examples of the nonionic PVA resin that does not have any charge-containing functional group for the water-soluble film include unmodified PVA and nonionic group-modified PVA resin.

### (Unmodified PVA)

The unmodified PVA can be produced by saponifying a vinyl ester polymer prepared by polymerizing a vinyl ester compound, though the production method is not particularly limited.

Examples of the vinyl ester compound include vinyl formate, vinyl acetate, vinyl trifluoroacetate, vinyl propionate, vinyl butyrate, vinyl caprate, vinyl laurate, vinyl versatate, vinyl palmitate, and vinyl stearate. These may be each used alone, or two of more of these may be used in combination. Of these, vinyl acetate is preferred for practicality.

A known polymerization method such as solution polymerization method, emulsion polymerization method or suspension polymerization method may be used for the polymerization. A solution polymerization method using an alcohol such as methanol, ethanol or isopropyl alcohol as a solvent is typically employed for the polymerization.

A polymerization catalyst may be properly selected from known polymerization catalysts including azo catalysts such as azobisisobutyronitrile, and peroxide catalysts such as acetyl peroxide, benzoyl peroxide, and lauroyl peroxide. These polymerization catalysts may be each used alone, or two or more of these may be used in combination. A reaction temperature is selected from a range of about 35°C to the boiling point of the solvent.

A known saponification method may be employed for the saponification. Typically, the resulting polymer is dissolved in an alcohol, and saponified in the presence of a saponification catalyst. Examples of the alcohol include methanol, ethanol, and butanol. These may be each used alone, or two or more of these may be used in combination. The concentration of the polymer in the alcohol is selected from a range of 20 to 50 mass % from the viewpoint of the solubility.

Usable as the saponification catalyst is an alkali catalyst. Examples of the alkali catalyst include alkali metal hydroxides and alkali metal alcoholates such as sodium hydroxide, potassium hydroxide, sodium methylate, sodium ethylate, and potassium methylate. An acid catalyst is also usable as the saponification catalyst. These may be each used alone, or two or more of these may be used in combination. The use amount of the saponification catalyst is preferably 1 to 100 mmol equivalents based on the amount of the vinyl ester compound.

Where the unmodified PVA is used for the water-soluble film, the average saponification degree of the unmodified PVA is preferably not less than 80 mol %, particularly preferably 82 to 99 mol %, more preferably 85 to 98 mol %, especially preferably 86 to 90 mol %. If the average saponification degree of the unmodified PVA is excessively low, the water solubility tends to be reduced. Even if the average saponification degree is higher, the water solubility tends to be reduced.

Where the unmodified PVA is used for the water-soluble film, the 4 mass % aqueous solution viscosity of the unmodified PVA is preferably 5 to 60 mPa•s, more preferably 10 to 45 mPa•s, particularly preferably 15 to 40 mPa•s, as measured at 20°C. If the 4 mass % aqueous solution viscosity of the unmodified PVA is excessively low, the water-soluble film tends to have a reduced mechanical strength. If the 4 mass % aqueous solution viscosity is excessively high, on the other hand, the productivity of the film tends to be reduced because an aqueous solution for use in the film formation is liable to have a higher viscosity.

The average saponification degree is measured in conformity with JIS K6726 3.5, and the 4 mass % aqueous solution viscosity is measured in conformity with JIS K6726 3.11.2.

### <Nonionic group-modified PVA resin>

The nonionic group-modified PVA resin is not particularly limited. Examples of a nonionic group of the nonionic group-modified PVA resin include hydroxyl group, oxyalkylene groups, amide group, and thiol group. Of these, the hydroxyl group and the oxyalkylene groups are preferred from the viewpoint of the compatibility with the casein and the casein salt and the water solubility.

The nonionic group-modified PVA resin can be produced, for example, by saponifying a copolymer prepared by copolymerizing a vinyl ester monomer and a nonionic group-containing unsaturated monomer.

Usable as the nonionic group-containing unsaturated monomer is an oxyalkylene group-containing unsaturated monomer. Examples of the oxyalkylene group-containing unsaturated monomer include polyoxyethylene (meth)allyl ether, polyoxypropylene (meth)allyl ether, polyoxyethylene (meth)acrylate, polyoxypropylene (meth)acrylate, polyoxyethylene (meth)acrylamide, polyoxypropylene (meth)acrylamide, polyoxyethylene (1-(meth)acrylamide-1,1-dimethylpropyl) ester, polyoxyethylene vinyl ether, and polyoxypropylene vinyl ether.

It is also preferred to use a nonionic group-modified PVA resin having a 1 ,2-diol structure in its side chain.

The modification degree of the nonionic group-modified PVA resin is typically 0.1 to 15 mol %, preferably 0.5 to 10 mol %, more preferably 1 to 9 mol %. If the modification degree of the nonionic group-modified PVA resin is excessively high, the productivity of the resin tends to be reduced, and the biodegradability tends to be poorer. If the modification degree is excessively low, the compatibility with the casein or the casein salt tends to be poorer.

The saponification degree of the nonionic group-modified PVA resin is 85 to 99.9 mol %, more preferably 90 to 99.8 mol %, especially preferably 95 to 99.7 mol %. If the saponification degree is excessively high, the production of the resin tends to be difficult. If the saponification degree is excessively low, the water solubility tends to be reduced.

The 4 mass % aqueous solution viscosity of the nonionic group-modified PVA resin is typically 1 to 20 mPa•s, preferably 1.5 to 12 mPa•s, particularly preferably 2 to 10 mPa•s. If the 4 mass % aqueous solution viscosity of the nonionic group-modified PVA resin is excessively low, the water-soluble film tends to have a reduced mechanical strength. If the 4 mass % aqueous solution viscosity is excessively high, on the other hand, the productivity of the film tends to be reduced because an aqueous solution for use in the film formation is liable to have a higher viscosity.

### [Anionic PVA resin]

The anionic PVA resin to be used for the water-soluble film contains an anionic group. Examples of the anionic group include carboxyl group, sulfonic acid group, and phosphoric acid group. Of these, the carboxyl group and the sulfonic acid group are preferred from the viewpoint of the water solubility and the chemical resistance.

Usable as the anionic PVA resin is an anionic group-modified PVA resin. The anionic group-modified PVA resin can be produced, for example, by saponifying a copolymer prepared by copolymerizing a vinyl ester monomer and an anionic group-containing unsaturated monomer or by post-modifying a PVA resin.

Usable as the anionic group-containing unsaturated monomer are carboxyl group-containing unsaturated monomer, sulfonic acid group-containing or sulfonate group-containing unsaturated monomer, and phosphoric acid group-containing unsaturated monomer.

Examples of the carboxyl group-containing unsaturated monomer include: carboxyl group-containing unsaturated compounds such as acrylic acid, methacrylic acid, crotonic acid, maleic acid, maleic anhydride, fumaric acid, and itaconic acid; compounds obtained by fully or partially neutralizing the carboxyl groups of the carboxyl group-containing unsaturated compounds with a base such as alkali compound (e.g., sodium hydroxide or potassium hydroxide); monoalkyl esters of the carboxyl group-containing unsaturated compounds such as methyl acrylate, ethyl acrylate, methyl methacrylate, monomethyl fumarate, and monomethyl maleate; and dialkyl esters of the carboxyl group-containing unsaturated compounds such as diethyl fumarate and diethyl maleate. The alkyl groups of these esters typically each have a carbon number of 1 to 20, preferably 1 to 10, particularly preferably 1 to 4, from the viewpoint of economy and practicality. Of these, the maleic compounds are preferred, and the monomethyl maleate is more preferred.

Examples of the sulfonic acid group-containing or sulfonate group-containing unsaturated monomer include: olefinsulfonic acids such as vinylsulfonic acid, allylsulfonic acid, and methallyl sulfonic acid, and salts of the olefinsulfonic acids; sulfoalkyl maleates such as sodium sulfopropyl-2-ethylhexyl maleate, sodium sulfopropyl tridecyl maleate, and sodium sulfopropyl eicosyl maleate; sulfoalkyl(meth)acrylamides such as sodium sulfomethylacrylamide, sodium sulfo-t-butylacrylamide, sodium sulfo-s-butylacrylamide, and sodium sulfo-t-butylmethacrylamide; and sulfoalkyl (meth)acrylates such as sodium sulfomethylacrylamide, sodium sulfo-t-butylacrylamide, sodium sulfo-s-butylacrylamide, and sodium sulfo-t-butylmethacrylamide. One or two or more unsaturated monomers selected from these unsaturated monomers may be used.

Examples of the phosphoric acid group-containing unsaturated monomer include phosphonocarboxylic acid compounds and alkali metal salts of the phosphonocarboxylic acid compounds.

Examples of the vinyl ester compound to be copolymerized with the unsaturated monomer include those described above for use in the production of the unmodified PVA. The copolymerization and the saponification may be carried out by the same methods as in the production of the unmodified PVA.

The modification degree of the anionic group-modified PVA resin is preferably 1 to 15 mol %, more preferably 2 to 10 mol %, particularly preferably 2 to 8 mol %, especially preferably 3 to 7 mol %. If the modification degree of the anionic group-modified PVA resin is excessively low, the water solubility tends to be reduced. If the modification degree is excessively high, the productivity of the PVA resin tends to be reduced, and the biodegradability tends to be poorer. Further, the blocking is liable to occur, resulting in poorer practicality.

The 4 mass % aqueous solution viscosity of the anionic group-modified PVA resin is preferably 5 to 50 mPa•s, more preferably 13 to 40 mPa•s, particularly preferably 17 to 30 mPa•s, as measured at 20°C. If the 4 mass % aqueous solution viscosity of the anionic group-modified PVA resin is excessively low, the water-soluble film tends to have a reduced mechanical strength. If the 4 mass % aqueous solution viscosity is excessively high, on the other hand, the productivity of the film tends to be reduced because an aqueous solution for use in the film formation is liable to have a higher viscosity.

The average saponification degree of the anionic group-modified PVA resin is preferably not less than 80 mol %, particularly preferably 85 to 99.9 mol %, more preferably 88 to 99 mol %, especially preferably 90 to 98 mol %. If the average saponification degree of the anionic group-modified PVA resin is excessively high, the water solubility tends to be reduced. If the average saponification degree is excessively low, the water solubility of the water-soluble film tends to be reduced with time depending on a chemical agent to be packaged with the film.

### [Cationic PVA resin]

The cationic PVA resin to be used for the water-soluble film contains a cationic group. Examples of the cationic group include groups derived from amine and its salt, quaternary ammonium salt, phosphonium salt, sulfonium salt, and heterocyclic compound. Of these, the quaternary ammonium salt is preferred from the viewpoint of the compatibility with the casein and the casein salt, and the water solubility.

Usable as the cationic PVA resin is a cationic group-modified PVA resin. The cationic group-modified PVA resin can be produced, for example, by saponifying a copolymer prepared by copolymerizing a vinyl ester compound and an unsaturated monomer containing the cationic group or a functional group convertible to the cationic group by saponification.

Examples of the cationic group-containing unsaturated monomer include quaternary ammonium salts such as trimethyl-(methacrylamido)-ammonium chloride, hydroxyethyltrimethylammonium chloride, diallyldimethylammonium chloride, trimethyl-(3-acrylamido-3-dimethylpropyl)-ammonium chloride, 3-acrylamidopropyltrimethylammonium chloride, and 3-methacrylamidopropy ltrimethylammonium chloride, N-(3-allyloxy-2-hydroxypropyl)dimethylamine, N-(4-allyloxy-3-hydroxybutyl)diethylamine, acrylamide, N-methylacrylamide, N-ethylacrylamide, N,N-dimethylacrylamide, diacetoneacrylamide, N-methylolacrylamide, methacrylamide, N-methylmethacrylamide, N-ethylmethacrylamide, and N-methylolmethacrylamide. One or two or more unsaturated monomers selected from these unsaturated monomers may be used.

Examples of the unsaturated monomer containing the functional group convertible to the cationic group by the saponification include carboxylic acid amide compounds such as N-vinylacetamide, N-vinylformamide, N-allylacetamide, and N-allylformamide. One or two or more unsaturated monomers selected from these unsaturated monomers may be used.

Examples of the vinyl ester compound to be copolymerized with the unsaturated monomer include those described above for use in the production of the unmodified PVA. The copolymerization and the saponification may be carried out by the same methods as in the production of the unmodified PVA.

The modification degree of the cationic group-modified PVA resin is typically 0.1 to 10 mol %, particularly preferably 0.1 to 8 mol %, more preferably 0.15 to 5 mol %, especially preferably 0.2 to 3 mol %. If the modification degree of the cationic group-modified PVA resin is excessively high, the productivity of the resin tends to be reduced, and the biodegradability tends to be poorer. If the modification degree is excessively low, the compatibility with the casein and the casein salt tends to be poorer.

The saponification degree of the cationic group-modified PVA resin is not particularly limited, but is typically 70 to 100 mol %, particularly preferably 75 to 99.8 mol %, more preferably 80 to 90 mol %. If the saponification degree of the cationic group-modified PVA resin is excessively high, the water solubility tends to be reduced. If the saponification degree is excessively low, the production of the resin tends to be difficult.

The 4 mass % aqueous solution viscosity of the cationic group-modified PVA resin is preferably 3 to 35 mPa•s, particularly preferably 4 to 30 mPa•s, more preferably 5 to 25 mPa•s, as measured at 20°C. If the 4 mass % aqueous solution viscosity of the cationic group-modified PVA resin is excessively low, the water-soluble film tends to have a reduced mechanical strength. If the 4 mass % aqueous solution viscosity is excessively high, on the other hand, the productivity of the film tends to be reduced because an aqueous solution for use in the film formation is liable to have a higher viscosity.

For the water-soluble film, the aforementioned PVA resins may be each used alone as the PVA resin (A), or two or more of the aforementioned PVA resins having different saponification degrees, different viscosities, different modifying species, and different modification degrees may be used in combination as the PVA resin (A).

The PVA resin (A) for the water-soluble film preferably includes at least one of the nonionic PVA resin and the cationic PVA resin from the viewpoint of the compatibility with the casein and the casein salt.

Particularly, the nonionic unmodified PVA is preferred from the viewpoint of balanced water solubility and easy handling, and the cationic PVA resin is preferred from the viewpoint of electrostatic interaction.

The average saponification degree of the PVA resin (A) to be used for the water-soluble film is preferably not less than 80 mol %, particularly preferably 82 to 99.9 mol %, more preferably 85 to 99 mol %.

If the average saponification degree of the PVA resin (A) is excessively low, the water solubility of the film tends to be reduced, and the solubility of the film tends to be reduced with time depending on a chemical agent to be packaged with the film. Even if the average saponification degree is higher, the water solubility tends to be reduced.

The 4 mass % aqueous solution viscosity of the PVA resin (A) is preferably 5 to 60 mPa•s, particularly preferably 10 to 45 mPa•s, more preferably 15 to 40 mPa•s, as measured at 20°C. If the 4 mass % aqueous solution viscosity of the PVA resin (A) is excessively low, the water-soluble film tends to have a reduced mechanical strength. If the 4 mass % aqueous solution viscosity is excessively high, the productivity of the film tends to be reduced because an aqueous solution for use in the film formation is liable to have a higher viscosity.

### [Plasticizer (B)]

The water-soluble film contains a plasticizer (B). This is preferred to impart the film with moderate flexibility. As the plasticizer (B), only one type of plasticizer may be used, or two or more types of plasticizers may be used in combination. From the viewpoint of the mechanical strength and the formability of the film, it is preferred to use two or more types of plasticizers in combination.

Examples of the plasticizer (B) include: glycerin compounds such as glycerin, diglycerin, and triglycerin; alkylene glycols such as diethylene glycol, triethylene glycol, polyethylene glycol, propylene glycol, polypropylene glycol, and dipropylene glycol; and sugar alcohols such as trimethylolpropane, sorbitol, xylitol, and maltitol. These may be each used alone, or two or more of these may be used in combination. Of these, glycerin, diglycerin, and polyethylene glycol are preferred in that these are easily available and have a sufficient plasticizing effect with a small amount thereof, and are preferably used in combination with sorbitol from the viewpoint of the long-term stability of a package.

Where two or more such plasticizers are used in combination, a polyhydric alcohol having a melting point of not lower than 80°C is preferably used from the viewpoint of the long-term stability of the package (particularly, a package in which a liquid agent is packaged). In particular, a polyhydric alcohol (b1) having a melting point of not lower than 80°C (hereinafter sometimes referred to simply as "plasticizer (b1)") and a polyhydric alcohol (b2) having a melting point of not higher than 50°C (hereinafter sometimes referred to simply as "plasticizer (b2)") are preferably used in combination as the plasticizer (B).

Many sugar alcohols, monosaccharides, and polysaccharides are usable as the polyhydric alcohol (b1) having a melting point of not lower than 80°C. Examples of the polyhydric alcohol (b1) include: divalent alcohols such as salicyl alcohol (83°C), catechol (105°C), resorcinol (110°C), hydroquinone (172°C), bisphenol-A (158°C), bisphenol-F (162°C), and neopentyl glycol (127°C); trivalent alcohols such as phloroglucinol (218°C); tetravalent alcohols such as erythritol (121°C), threitol (88°C), and pentaerythritol (260°C); pentavalent alcohols such as xylitol (92°C), arabitol (103°C), fucitol (153°C), glucose (146°C), and fructose (104°C); hexavalent alcohols such as mannitol (166°C), sorbitol (95°C), and inositol (225°C); octavalent alcohols such as lactitol (146°C), sucrose (186°C), and trehalose (97°C); and nonavalent and higher-valent alcohols such as maltitol (145°C). These may be each used alone, or two or more of these may be used in combination. In the above description, parenthesized numerals indicate the melting points of the respective compounds.

Of the aforementioned polyhydric alcohols, polyhydric alcohols having a melting point of not lower than 85°C are preferred, and polyhydric alcohols having a melting point of not lower than 90°C are particularly preferred from the viewpoint of the tensile strength of the water-soluble film. The upper limit of the melting point is typically 300°C, particularly preferably 200°C.

For the water-soluble film, the plasticizer (b1) preferably has 4 or more hydroxyl groups in its molecule from the viewpoint of the compatibility with the PVA resin (A), and particularly preferably has 5 to 10 hydroxyl groups, more preferably 6 to 8 hydroxyl groups, in its molecule. Specifically, for example, sorbitol, sucrose, trehalose or the like is preferred.

For the water-soluble film, the plasticizer (b1) preferably has a molecular weight of not less than 150, more preferably 160 to 500, particularly preferably 180 to 400, from the viewpoint of the tension of the water-soluble film. Specifically, for example, sorbitol, sucrose or the like is preferred.

On the other hand, many aliphatic alcohols are usable as the polyhydric alcohol (b2) having a melting point of not higher than 50°C. Examples of the polyhydric alcohol (b2) include: divalent alcohols such as ethylene glycol (-13°C), diethylene glycol (-11°C), triethylene glycol (-7°C), propylene glycol (-59°C), tetraethylene glycol (-5.6°C), 1,3-propanediol (-27°C), 1,4-butanediol (20°C), 1,6-hexanediol (40°C), tripropylene glycol, and polyethylene glycols having a molecular weight of not greater than 2,000; and trivalent and higher-valent alcohols such as glycerin (18°C), diglycerin, and triethanolamine (21°C). Of these, polyhydric alcohols having a melting point of not higher than 30°C are preferred, and polyhydric alcohols having a melting point of not higher than 20°C are particularly preferred from the viewpoint of the flexibility of the water-soluble film. The lower limit of the melting point is typically -80°C, preferably -40°C, particularly preferably -15°C, more preferably -5°C. These may be each used alone, or two or more of these may be used in combination. In the above description, parenthesized numerals indicate the melting points of the respective compounds.

For the water-soluble film, the plasticizer (b2) preferably has 4 or less hydroxyl groups, particularly preferably 3 or less hydroxyl groups, in its molecule for easier control of the flexibility of the film at around a room temperature (25°C). Specifically, for example, glycerin or the like is preferred.

For the water-soluble film, the plasticizer (b2) preferably has a molecular weight of not higher than 100, more preferably 50 to 100, particularly preferably 60 to 95, for easier control of the flexibility of the film. Specifically, for example, glycerin or the like is preferred.

For the water-soluble film, an additional plasticizer (b3) may be used in combination with the aforementioned plasticizers (b1) and (b2). Examples of the plasticizer (b3) include: alcohols such as trimethylolpropane (58°C), diethylene glycol monomethyl ether, cyclohexanol, carbitol, and polypropylene glycol; ethers such as dibutyl ether; carboxylic acids such as stearic acid, oleic acid, linoleic acid, linolenic acid, sorbic acid, citric acid, and adipic acid; ketones such as cyclohexanone; amines such as monoethanolamine, triethanolamine, ethylenediamine, and imidazole compounds; and amino acids such as alanine, glycine, aspartic acid, glutamic acid, histidine, lysine, and cysteine. These may be each used alone, or two or more of these may be used in combination.

The proportion of the plasticizer (B) is preferably 15 to 60 parts by mass, particularly preferably 20 to 55 parts by mass, more preferably 25 to 50 parts by mass, based on 100 parts by mass of the PVA resin (A).

If the proportion of the plasticizer (B) is excessively small, the water-soluble film tends to be poorer in processability with a lower plasticizing effect, and tends to be poorer in appearance and long-term toughness when being formed into a package. If the proportion of the plasticizer (B) is excessively great, the film tends to have a reduced strength and suffer from the blocking.

The mass ratio (b1)/(b2) between the plasticizer (b1) and the plasticizer (b2) is preferably 0.1 to 5, more preferably 0.35 to 4.5, particularly preferably 0.4 to 4, still more preferably 0.5 to 3.5, especially preferably 0.7 to 3. If the mass ratio is excessively small, the water-soluble film tends to be excessively soft, and suffer from the blocking. Further, the water-soluble film tends to be poorer in long-term shape stability when being formed into a liquid agent package. If the mass ratio is excessively great, the water-soluble film tends to be excessively hard to be thereby brittle in a lower humidity environment, and tends to be poorer in sealability.

The proportion of the plasticizer (b1) is preferably 5 to 40 parts by mass, more preferably 8 to 30 parts by mass, particularly preferably 10 to 25 parts by mass, based on 100 parts by mass of the PVA resin (A), and the proportion of the plasticizer (b2) is preferably 5 to 40 parts by mass, more preferably 10 to 35 parts by mass, based on 100 parts by mass of the PVA resin (A).

If the proportion of the plasticizer (b1) is excessively small, the water-soluble film tends to be excessively soft, thereby suffering from the blocking. Further, the water-soluble film tends to be poorer in long-term shape stability when being formed into a liquid agent package. If the proportion of the plasticizer (b1) is excessively great, the water-soluble film tends to be excessively hard to be thereby brittle in the lower humidity environment. If the proportion of the plasticizer (b2) is excessively small, the water-soluble film tends to be excessively hard to be thereby brittle in the lower humidity environment. If the proportion of the plasticizer (b2) is excessively great, the water-soluble film tends to be excessively soft, thereby suffering from the blocking.

Further, the total proportion of the plasticizer (b1) and the plasticizer (b2) is preferably not less than 70 mass %, more preferably not less than 80 mass %, particularly preferably not less than 87 mass %, especially preferably not less than 90 mass %, still more preferably not less than 95 mass %, based on the overall mass of the plasticizer (B). Most preferably, the plasticizer (B) includes the plasticizer (b1) and the plasticizer (b2) alone. If the total proportion of the plasticizers (b1) and (b2) is excessively small, the mechanical strength tends to be reduced.

### [Filler (C)]

The water-soluble film may further contain a filler (C) as required.

The filler (C) is contained in the film to impart the film with an antiblocking property. Examples of the filler (C) include an organic filler (c1) and an inorganic filler (c2). Of these, the organic filler (c1) is preferably used.

The filler (C) preferably has an average particle diameter of 0.1 to 50 µm, particularly preferably 1 to 35 µm. The average particle diameter of the filler (C) is calculated based on a D50 value of cumulative volume distribution (cumulative 50% particle diameter) measured by means of a particle size distribution measuring apparatus of laser diffraction type.

The organic filler (c1) means organic compound particles (primary particles) in needle form, bar form, lamellar form, scale form, spherical form or any given form, or agglomerates (secondary particles) of the organic compound particles.

The organic filler (c1) is mainly selected from polymer compounds, and examples thereof include melamine resins, polymethyl (meth)acrylate resins, polystyrene resins, and biodegradable resins such as starches and polylactic acids. Of these, the polymethyl (meth)acrylate resins, the polystyrene resins, and the biodegradable resins such as the starches are preferred. Particularly, the starches are preferred from the viewpoint of the dispersibility thereof in the PVA resin (A).

Examples of the starches include raw starches (corn starch, potato starch, sweet potato starch, wheat starch, Cassava starch, sago starch, tapioca starch, sorghum starch, rice starch, pea starch, kudzu starch, bracken starch, lotus starch, water chestnut starch, and the like), physically modified starches (α-starch, fractionated amylose, moist heat-treated starch, and the like), enzyme-modified starches (hydrolyzed dextrin, enzyme-decomposed dextrin, amylose, and the like), chemically degraded starches (acid-treated starch, hypochlorous acid-oxidized starch, dialdehyde starch, and the like), and chemically modified starch derivatives (esterified starch, etherified starch, cationized starch, crosslinked starch, and the like). Of these, the raw starches, particularly the corn starch and the rice starch, are preferably used from the viewpoint of availability and economy.

The organic filler (c1) preferably has an average particle diameter of 5 to 50 µm, particularly preferably 10 to 40 µm, more preferably 15 to 35 µm. If the average particle diameter is excessively small, the film is more susceptible to the blocking. If the average particle diameter is excessively great, the particles of the filler are liable to agglomerate to be thereby deteriorated in dispersibility. Further, the film tends to suffer from pinholes when being stretched in the film processing.

The inorganic filler (c2) means inorganic compound particles (primary particles) in needle form, bar form, lamellar form, scale form, spherical form or any given form, or agglomerates (secondary particles) of the inorganic compound particles.

Examples of the inorganic filler (c2) include inorganic oxide compounds such as silica (silicon dioxide), diatom earth, titanium oxide, calcium oxide, magnesium oxide, aluminum oxide, barium oxide, germanium oxide, tin oxide, and zinc oxide, talc, clay, kaolin, mica, asbestos, gypsum, graphite, glass balloons, glass beads, calcium sulfate, barium sulfate, ammonium sulfate, calcium sulfite, calcium carbonate, calcium carbonate whisker, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These may be each used alone, or two or more of these may be used in combination.

Of these, the inorganic oxide compounds and talc are preferred. Particularly, titanium oxide, talc, and silica are preferred, and silica is more preferred.

The inorganic filler (c2) preferably has an average particle diameter of 1 to 20 µm, particularly preferably 2 to 15 µm, more preferably 3 to 10 µm. If the average particle diameter is excessively small, the film tends to be poorer in flexibility and toughness, and is more susceptible to the blocking. If the average particle diameter is excessively great, the film tends to suffer from pinholes when being stretched in the film processing.

The fillers described above may be each used alone, or two or more of these fillers may be used in combination as the filler (C).

The proportion of the filler (C) is preferably 1 to 30 parts by mass, particularly preferably 1.5 to 25 parts by mass, more preferably 2 to 20 parts by mass, based on 100 parts by mass of the PVA resin (A). If the proportion of the filler (C) is excessively small, the film is more susceptible to the blocking. If the proportion of the filler (C) is excessively great, the film tends to be poorer in flexibility and toughness.

### [Surfactant (D)]

The water-soluble film may further contain a surfactant (D) or the like as required.

For the water-soluble film, the surfactant (D) is used for improvement of the peelability of the film when the film is removed from a cast surface in the production of the film. A nonionic surfactant, a cationic surfactant or an anionic surfactant is typically used as the surfactant (D). Examples of the surfactant (D) include polyoxyethylene nonyl phenyl ether, polyoxyethylene octyl nonyl ether, polyoxyethylene dodecyl phenyl ether, polyoxyethylene alkyl allyl ethers, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate monoethanolamine salts, polyoxyethylene alkylamino ethers such as polyoxyethylene laurylamino ether and polyoxyethylene stearylamino ether, sorbitan monopalmitate, sorbitan monostearate, glycerin stearate, and sucrose fatty acid esters. Of these, the polyoxyalkylene alkyl ether phosphate monoethanolamine salts and polyoxyethylene laurylamino ether are preferred from the viewpoint of production stability.

The surfactants described above may be each used alone, or two or more of these surfactants may be used in combination as the surfactant (D).

The proportion of the surfactant (D) is preferably 0.01 to 3 parts by mass, particularly preferably 0.05 to 2.5 parts by mass, more preferably 0.1 to 2 parts by mass, based on 100 parts by mass of the PVA resin (A). If the proportion of the surfactant (D) is excessively small, the film tends to have poorer peelability when being removed from a cast surface of a film forming apparatus in the film production, thereby reducing the productivity. If the proportion of the surfactant (D) is excessively great, the film is more susceptible to the blocking, and tends to have a reduced adhesive strength when being sealed in the production of a package.

The water-soluble film may contain an additional water-soluble polymer other than the PVA resin (A) (e.g., sodium polyacrylate, polyethylene oxide, polyvinyl pyrrolidone, dextrin, chitosan, chitin, methylcellulose, hydroxyethylcellulose or the like), perfume, rust preventing agent, colorant, bulking agent, defoaming agent, UV absorber, liquid paraffins, fluorescent brightener, and bitter component (e.g., denatonium benzoate or the like), as long as the object of the present disclosure is not impaired. These may be each used alone, or two or more of these may be used in combination.

The water-soluble film may further contain an antioxidant. Examples of the antioxidant include sulfites such as sodium sulfite, potassium sulfite, calcium sulfite, and ammonium sulfite, tartaric acid, ascorbic acid, sodium thiosulfate, catechol, and Rongalite. Of these, the sulfites are preferred, and sodium sulfite is particularly preferred. The proportion of the antioxidant is preferably 0.1 to 10 parts by mass, particularly preferably 0.2 to 5 parts by mass, more preferably 0.3 to 3 parts by mass, based on 100 parts by mass of the PVA resin (A).

### <Production of water-soluble film>

The casein and/or the casein salt and the PVA resin (A), preferably the plasticizer (B), and optionally the filler (C), the surfactant (D) and the like described above are blended, and then dissolved or dispersed in water, whereby a film formation material for the water-soluble film is prepared. Then, the film formation material is formed into a film.

### [Dissolution step]

In a dissolution step, the ingredients blended in the aforementioned manner are dissolved or dispersed in water. Thus, an aqueous solution or an aqueous dispersion is prepared as the film formation material.

In the preparation of the film formation material, a mixing method for mixing the casein and/or the casein salt, the PVA resin (A), and the other additives is not particularly limited. Examples of the mixing method include: a method in which the casein and/or the casein salt, the PVA resin (A), and the other additives are mixed together, and the resulting mixture is mixed and dissolved in water; a method in which the casein and/or the casein salt, the PVA resin (A), and the other additives are separately dissolved in water, and then the resulting solutions are mixed together; and a method in which the casein and/or the casein salt, and the PVA resin (A) are separately dissolved in water, and then the other additives and the resulting solutions are mixed together for dissolution.

For the dissolution in water, a normal-temperature dissolution method, a high-temperature dissolution method, a pressure dissolution method or the like is typically employed. Particularly, the high-temperature dissolution method and the pressure dissolution method are preferred, because these methods reduce the amount of the undissolved matter and ensure a higher productivity.

From the viewpoint of the compatibility, the casein and/or the casein salt, and the PVA resin (A) are preferably separately dissolved in water. In this case, a temperature for the dissolution of the casein and/or the casein salt is preferably 50°C to 90°C, particularly preferably 55°C to 85°C, more preferably 60°C to 80°C.

After the dissolution, the resulting film formation material is defoamed. Exemplary defoaming methods include stationary defoaming method, vacuum defoaming method, and twin-screw extrusion defoaming method. Particularly, the stationary defoaming method and the twin-screw extrusion defoaming method are preferred.

A defoaming temperature is typically 50°C to 100°C, preferably 40°C to 80°C, particularly preferably 50°C to 75°C, still more preferably 55°C to 70°C. If the defoaming temperature is excessively high, the casein tends to be denatured. If the deforming temperature is excessively low, the film formation material tends to have a higher viscosity to require a longer period of time for the defoaming, resulting in lower productivity.

A defoaming period is typically 2 to 30 hours, preferably 5 to 25 hours.

The film formation material preferably has a solid concentration of 10 to 60 mass %, particularly preferably 12 to 50 mass %, more preferably 15 to 40 mass %. If the solid concentration is excessively low, the productivity of the film tends to be reduced. If the solid concentration is excessively high, the film formation material tends to have an excessively high viscosity, requiring a longer period of time for the defoaming. Further, a die line tends to occur on the film in the film formation.

The pH of the film formation material is typically 4 to 8, preferably 4.8 to 7.5.

### [Film formation step]

In the film formation step, the film formation material prepared in the dissolution step is formed into a film, which is dried as required. Thus, the water-soluble film is produced as having a water content of not higher than 15 mass %.

Exemplary film formation methods include melt extrusion method and casting method. From the viewpoint of the accuracy of the thickness of the film, the casting method is preferred.

In the casting method, the film formation material is cast through a slit of a T-slit die or the like onto a cast surface such as a metal surface of an endless belt or a drum roll, or a plastic base surface of a polyethylene terephthalate film or the like. The film formation material thus cast is dried and further heat-treated as required, whereby the water-soluble film is produced.

In the film formation step, the water-soluble film is peeled off from the cast surface, and conveyed and wound around a core pipe into a film roll. The resulting film roll may be supplied as a product on an as-is basis. Preferably, the water-soluble film may be slit to be supplied in the form of a film roll having a desired film width.

The water-soluble film may have plain surfaces, but one or both of the surfaces of the water-soluble film are preferably subjected to a texturing process so as to be imparted with an emboss pattern, a minute uneven pattern, a special engraved pattern or the like for the antiblocking property, the slidability during the processing, and the appearance, and for suppression of adhesion between film products.

The thickness of the water-soluble film is properly selected according to the use application or the like of the film, but is preferably 10 to 120 µm, particularly preferably 15 to 110 µm, more preferably 20 to 100 µm. If the thickness of the water-soluble film is excessively small, the film tends to have a reduced mechanical strength. If the thickness of the water-soluble film is excessively great, the film tends to be dissolved at a lower dissolution speed in water, and the film formation efficiency tends to be reduced.

The width of the water-soluble film is properly selected according to the use application or the like of the film, but is preferably 300 to 5,000 mm, particularly preferably 500 to 4,000 mm, more preferably 600 to 3,000 mm. If the width of the film is excessively small, the production efficiency tends to be reduced. If the width of the film is excessively great, it tends to be difficult to control the slackness and the thickness of the film.

Further, the length of the water-soluble film is properly selected according to the use application or the like of the film, but is preferably 100 to 20,000 m, particularly preferably 800 to 15,000 m, more preferably 1,000 to 10,000 m. If the length of the film is excessively small, the film tends to require troublesome film switching, thereby resulting in lower production efficiency. If the length of the film is excessively great, the resulting film roll tends to have a poorer appearance due to tight winding.

The water-soluble film thus produced preferably has a water content of 3 to 15 mass %, particularly preferably 5 to 9 mass %, more preferably 6 to 8 mass %, from the viewpoint of the mechanical strength and the sealability. If the water content is excessively low, the film tends to be excessively hard to be thereby poorer in formability when being formed into the package and in the impact resistance of the package. If the water content is excessively high, the blocking is liable to occur. The water content of the water-soluble film may be controlled by properly setting conditions for the drying and the moisture conditioning.

The water content is measured in conformity with JIS K6726 3.4. The resulting volatile content is defined as the water content.

The water-soluble film may be used as a single layer film, or may be laminated with another film or a resin layer for use in the form of a multilayer structure.

### [Chemical agent package]

A chemical agent package according to another embodiment of the present invention (hereinafter often referred to simply as "the chemical agent package") is a package produced by packaging a chemical agent with the water-soluble film produced in the aforementioned manner. The chemical agent is packaged with the water-soluble film and, therefore, when the entire chemical agent package is put in water, the water-soluble film is dissolved in water, and then the chemical agent is dissolved or dispersed in water to exhibit its effect. The chemical agent package is advantageous for a chemical agent package in which a relatively small amount (single dose) of the chemical agent is packaged.

Examples of the chemical agent to be packaged include agricultural chemicals such as pesticide, disinfectant, and herbicide, fertilizers, and detergents. Detergents such as laundry detergents and dishwashing detergents are particularly preferred. The chemical agent may be liquid or solid. The liquid chemical agent is in a liquid form. The solid chemical agent may be in granular form, tablet form or powdery form. The chemical agent is preferably dissolved or dispersed in water for use. The chemical agent package particularly preferably contains a liquid detergent. The pH of the chemical agent may be alkaline, neutral or acidic.

The liquid detergent preferably has a pH value of 6 to 12, particularly preferably 6.5 to 11, more preferably 7 to 8, when being dissolved or dispersed in water. The liquid detergent preferably has a water content of not greater than 15 mass %, particularly preferably 0.1 to 10 mass %, more preferably 0.1 to 7 mass %. With this arrangement, the water-soluble film is excellent in water solubility without gelation and insolubilization.

The pH value is measured in conformity with JIS K3362 8.3, and the water content is measured in conformity with JIS K3362 7.21.3.

A known method may be employed for packaging the chemical agent such as the liquid detergent with the water-soluble film to produce the chemical agent package.

The chemical agent package is produced, for example, by bonding two water-soluble films. One of the films (bottom film) is fixed onto a die disposed in a lower portion of a forming apparatus, and the other film (top film) is fixed to an upper portion of the forming apparatus. After the chemical agent such as the liquid detergent is put in a formed portion of the bottom film, the top film is press-bonded to the bottom film. After the press bonding, the resulting package is released from vacuum. Thus, the chemical agent package is produced.

Exemplary methods for press-bonding the films after the chemical agent is put in the formed film portion include: (1) heat sealing method; (2) water sealing method; and (3) adhesive sealing method, among which the water sealing method (2) is versatile and advantageous.

### EXAMPLES

The embodiments of the present invention will hereinafter be described more specifically by way of examples thereof. However, it should be understood that the present invention be not limited to the examples within the scope of the present invention.

In the following examples, "parts" and "%" are based on mass.

The following ingredients were prepared for water-soluble films.

### <Casein and/or casein salt>

- Sodium caseinate 180 available from Fronterra

### <PVA resin (A)>

- Nonionic PVA resin (a1): An unmodified PVA having a 4% aqueous solution viscosity of 18 mPa•s at 20°C, and an average saponification degree of 88 mol %
- Anionic PVA resin (a2): A carboxyl group-modified PVA resin having a 4% aqueous solution viscosity of 22 mPa•s at 20°C, an average saponification degree of 94 mol %, and a monomethyl maleate modification degree of 2.0 mol %
- Cationic PVA resin (a3): A cationic group-modified PVA resin having a 4% aqueous solution viscosity of 20 mPa•s at 20°C, an average saponification degree of 87 mol %, and a quaternary ammonium salt content of 1.0 mol %.

### <Plasticizer (B)>

- Plasticizer (b1): Sorbitol
- Plasticizer (b2): Glycerin

### <Other additives>

- Surfactant (d1): Polyoxyalkylene alkyl ether phosphate monoethanolamine salt

### <Example 1>

First, 25 parts of sodium caseinate, 75 parts of the nonionic PVA resin (a1) as the PVA resin (A), 20 parts of sorbitol (b1) and 20 parts of glycerin (b2) as the plasticizer (B), and 0.2 parts of the polyoxyalkylene alkyl ether phosphate monoethanolamine salt (d1) as the surfactant (D) were mixed together with water, and were dissolved and dispersed in water. Thus, a resin composition aqueous dispersion having a solid concentration of 25% was prepared as a film formation material. The film formation material thus prepared was subjected to stationary defoaming process at 60°C for 24 hours.

After the stationary defoaming process, the film formation material was cast on a polyethylene terephthalate film (as a cast surface), and the resulting film was passed through a 3-m long drying chamber (at 105°C) at a speed of 0.350 m/minute to be thereby dried. Thus, a water-soluble film having a thickness of 90 µm and a water content of 6.9 mass % was produced.

The water-soluble film thus produced was evaluated by the following methods. The evaluation results are shown below in Table 1.

### <Compatibility>

### [Evaluation method]

The water-soluble film was visually observed to be checked for the presence of a sea-island structure with the use of a laser microscope (available from Keyence Corporation), and was evaluated for compatibility.

### [Evaluation criteria]

- Very good (o): Phase separation was not observed substantially without the sea-island structure.
- Good (Δ): Slight phase separation was observed with smaller islands in the sea-island structure.
- Poor (×): Obvious phase separation was observed with 200-µm or larger islands in the sea-island structure.

### <Solubility>

### [Evaluation method]

The water-soluble film produced in the aforementioned manner was cut to a size of 3 cm × 5 cm, and the resulting film sample was put in a 1-L beaker containing water (1 L) and fixed by a jig. Then, the water was stirred by a stirrer (having a rotor length of 3 cm and a rotation speed of 750 rpm) while being maintained at a water temperature of 20°C. When dispersion of any insoluble particulate pieces of the film sample having a diameter of 1 mm or greater was not visually observed, the film sample was considered to be dissolved. Based on the time needed for the dissolution, the water-soluble film was evaluated for solubility.

### [Evaluation criteria]

- Very good (o): The film sample was dissolved in shorter than 90 seconds.
- Good (Δ): The film sample was dissolved in 90 seconds to 300 seconds.
- Poor (×): The film sample was not dissolved even after a lapse of 300 seconds.

<Mechanical property>

### [Evaluation method]

The tensile strength and the tensile elongation of the water-soluble film produced in the aforementioned manner were measured in conformity with JIS K7127. Before the measurement, the water-soluble film was allowed to stand in an environment conditioned at 23°C at a humidity of 50 %RH for 24 hours. In this environment, the tensile strength and the tensile elongation of the water-soluble film were measured at a stretching rate of 200 mm/minute (with a film width of 15 mm and an inter-chuck distance of 50 mm) by means of AUTOGRAPH AG-XPlus (available from Shimadzu Corporation).

### [Evaluation criteria]

- Very good (o): The tensile strength was not less than 10 Mpa, and the tensile elongation was greater than 300%.
- Good (Δ): The tensile strength was not less than 10 Mpa, and the tensile elongation was 200 to 300%.
- Poor (×): The tensile strength was 0 to less than 10 Mpa, and/or the tensile elongation was less than 200%.

### <Production of package>

With the use of the water-soluble film of Example 1 produced in the aforementioned manner, a package was produced by the following method by means of a package producing apparatus available from Engel Corporation.

Specifically, the water-soluble film was allowed to stand in an environment conditioned at 23°C at 40 %RH for 24 hours to be thereby moisture-conditioned. In this environment, a bottom film of the water-soluble film was fixed onto a die (for a package to be formed as having a length of 45 mm, a width of 42 mm and a height of 30 mm) disposed in a lower portion of the apparatus, and a top film of the water-soluble film was fixed to an upper portion of the apparatus. The bottom film was heated for 4 seconds by a dryer capable of blowing hot air at 70°C, and was vacuum-formed on the die. Thereafter, 34 mL of a commercially available liquid laundry detergent (having a formulation containing 11% of propylene glycol, 7.5% of glycerin, 67% of a surfactant, and 14.2% of water, and having a pH of 7.5) was put in a formed bottom film portion of the water-soluble film. Then, 0.25 g of water was applied over the entire surface of the top film (having a width of 80 mm and a length of 140 mm), and the top film and the bottom film were pressed for 10 seconds to be thereby press-bonded to each other. Thereafter, the bottom film was released from vacuum. Thus, the package was produced.

### <Compression strength>

### [Evaluation method]

The compression strength of the package produced by the aforementioned method was measured at a test speed of 200 mm/minute by means of AUTOGRAPH AG-XPlus (available from Shimadzu Corporation) when the package was broken. A 5kN load cell was used.

### [Evaluation criteria]

- Very good (o): The compression strength was greater than 500 N.
- Good (Δ): The compression strength was 200 to 500 N.
- Poor (×): The package was easily broken with a compression strength of less than 200 N or with its seal portion easily unsealed.

### <Appearance of package>

The package produced by the aforementioned method was visually observed, and was evaluated for appearance.

### [Evaluation criteria]

- Very good (o): The package was as transparent as the original film.
- Good (Δ): The film was slightly whitened.
- Poor (×): The film was obviously whitened, so that the content of the package was less visible.

### <Example 2>

A water-soluble film (having a thickness of 88 µm) and a package were produced and evaluated in substantially the same manner as in Example 1, except that the anionic group-modified PVA resin (a2) was used as the PVA resin.

### <Example 3>

A water-soluble film (having a thickness of 88 µm) and a package were produced and evaluated in substantially the same manner as in Example 1, except that the cationic group-modified PVA resin (a3) was used as the PVA resin.

### <Examples 4 and 5>

Water-soluble films (each having a thickness of 88 µm) and packages were produced and evaluated in substantially the same manner as in Example 1, except that the plasticizer (B) was used in amounts shown in Table 1.

### <Comparative Example 1>

First, 100 parts of sodium caseinate and 25 parts of glycerin were mixed with water, and dissolved and dispersed in water, whereby an aqueous dispersion having a solid concentration of 25% was prepared as a film formation material.

A water-soluble film having a thickness of 95 µm was produced and evaluated in substantially the same manner as in Example 1 by using the resulting film formation material. The water-soluble film thus produced was poorer in mechanical property, making it impossible to produce a package.

**Table 1**

| | | Example 1 | Example 2 | Example 3 | Example 4 | Example 5 | Comparative Example 1 |
|---|---|---|---|---|---|---|---|
| PVA resin (A) | | (a1) 75 parts | (a2) 75 parts | (a3) 75 parts | (a1) 75 parts | (a1) 75 parts | - |
| Sodium caseinate | | 25 parts | 25 parts | 25 parts | 25 parts | 25 parts | 100 parts |

| Plasticizer (B) | | | | | | | |
|---|---|---|---|---|---|---|---|
| | (b1) | 20 parts | 20 parts | 20 parts | 10 parts | 7.5 parts | 25 parts |
| | (b2) | 20 parts | 20 parts | 20 parts | 10 parts | 7.5 parts | - |

| Water-soluble film | | | | | | | |
|---|---|---|---|---|---|---|---|
| | Compatibility | ○ | Δ | ○ | ○ | ○ | - |
| | Solubility | ○ | ○ | ○ | ○ | ○ | ○ |
| | Mechanical property | ○ | Δ | ○ | ○ | Δ | × |

| Package | | | | | | | |
|---|---|---|---|---|---|---|---|
| | Compression strength | ○ | Δ | ○ | ○ | ○ | × |
| | Appearance | ○ | Δ | ○ | ○ | Δ | × |

| | | | | | | | |
|---|---|---|---|---|---|---|---|
| (a1) Nonionic PVA resin (a2) Anionic PVA resin (a3) Cationic PVA resin | | | | | | | |

The water-soluble films of Examples 1 to 5 were excellent in compatibility between the casein and the PVA resin, and in mechanical property. Further, the packages of Examples 1 to 5 each had a sufficient compression strength. Therefore, the water-soluble films of Examples 1 to 5 were suitable for packaging applications. In the compression strength evaluation, the packages of Examples 1 to 5 were broken without their seal surfaces easily unsealed, i.e., were excellent in sealability.

On the other hand, the water-soluble film of Comparative Example 1 containing the casein alone was poorer in mechanical property and compression strength. It was impossible to form a package from the water-soluble film of Comparative Example 1. Therefore, the water-soluble film of Comparative Example 1 was impractical.

While specific forms of the embodiments of the present invention have been shown in the aforementioned inventive examples, the inventive examples are merely illustrative of the invention but not limitative of the invention. It is contemplated that various modifications apparent to those skilled in the art could be made within the scope of the invention.

The water-soluble film of the present disclosure can be used for packaging applications (unit packaging applications) for chemical agents such as agricultural agents and detergents, and for (water pressure) transfer films, sanitary supplies such as sanitary napkins and disposable diapers, waste disposal supplies such as ostomy bags, medical supplies such as blood-absorbing sheets, and temporary base materials for seeding sheets, seeding tapes, and embroidery bases.

Further, the film of the present disclosure, which is a blend film containing the PVA resin and the natural material usable for food and pharmaceutical products, is also useful for edible applications (food packaging applications).

## Claims

1. A water-soluble film comprising:
casein and/or a casein salt;
a polyvinyl alcohol resin (A); and
a plasticizer (B);
wherein the polyvinyl alcohol resin (A) comprises a cationic polyvinyl alcohol resin and/or a nonionic polyvinyl alcohol resin;
wherein a content ratio (mass ratio) of the casein and/or the casein salt to the polyvinyl alcohol resin (A) is 15/85 to 45/55;
wherein the plasticizer (B) is present in a proportion of 15 to 60 parts by mass based on 100 parts by mass of the polyvinyl alcohol resin (A).

2. The water-soluble film according to claim 1, wherein the casein salt is at least one selected from the group consisting of potassium caseinate, sodium caseinate, calcium caseinate, and magnesium caseinate.

3. The water-soluble film according to claim 1 or 2, which has a water content of 3 to 15 mass %.

4. The water-soluble film according to any one of claims 1 to 3, which is used to package a chemical agent.

5. A chemical agent package comprising:
a package bag formed from the water-soluble film according to any one of claims 1 to 4; and
a chemical agent packaged in the package bag.

6. The chemical agent package according to claim 5, wherein the chemical agent is a liquid detergent.

7. A method for producing the water-soluble film according to any one of claims 1 to 4, comprising:
casting, on a cast surface, a film formation material containing the casein and/or the casein salt, the polyvinyl alcohol resin (A), and the plasticizer (B); and
drying the cast film formation material.

8. A method for producing the chemical agent package according to claim 5 or 6, comprising:
wrapping a chemical agent with the water-soluble film according to any one of claims 1 to 4; and
press-sealing the water-soluble film.
